# EUROPEAN PATENT APPLICATION

(11) **EP 1 113 635 A1**
(43) Date of publication of application: **04.07.2001**
(21) Application number: 99830827.4
(22) Date of filing: 31.12.1999
(51) Int. Cl.: H04L 27/00

(54) **Robust communication system for transmissions in a noisy environment**

(71) Applicant: STMicroelectronics S.r.l., 20041 Agrate Brianza (Milano) (IT)
(72) Inventor: Di Bernardo, Giovanni, 95030 Mascalucia (CT) (IT); Branciforte, Marco, 95127 Catania (IT); Milazzo, Marinella, 95030 Ragalna (CT) (IT); Occhipinti, Luigi, 97100 Ragusa (IT)
(74) Representative: Botti, Mario

(57) **Abstract**

The invention concerns a robust communication system (1) for transmissions through a noisy environment, which comprises a cascade of a discrete signal source (2), a chaotic modulator (3) for the signal, a noisy transmission channel (4), and an incoherent discriminator or receiver (5). Advantageously in a preferred embodiment, the incoherent discriminator (5) comprises a high-pass filter (6) effective to remove the lowest frequency harmonics of the received signal, a rectifier (7) providing the absolute value of the wave, a low-pass filter (8) carrying out a mean of the rectified wave, and a comparator (9) placed after the low-pass filter.

## Description

This invention relates to a robust communication system for transmissions through a noisy environment.

### Field of the Invention

As is well known in this technical field, modern communication and telecommunication systems are generally classed according to the nature (digital, analog) of the signal, the type of transmission, the type of modulation, the transmissive medium, the type of channel, and the nature of the receiver.

The minimal objective of any communication systems is to ensure that the information transmitted on the transmission channel is correctly received. The term "correctly" may actually be too restrictive, and the term "efficiently" be preferable. In practice, the goal is to provide a re-constructed information closer to the transmitted information.

With an ideal transmission channel, no special measures would have to be taken. However, all channels have to put up with some disturbance. The nature of this disturbance may vary with the type of the channel, the environmental and weather conditions under which the transmission is carried out, and the frequency and nature (digital or analog) of the signal.

The problems encountered in digital signal transmission are reviewed herein below.

Digital information, expressed as a sequence of symbols, is converted into an analog waveform by a modulation process and is then transmitted on the transmission channel. At the receive end, a demodulator re-constructs the transmitted sequence of symbols. Transmission efficiency is usually stated as Bit Error Rate (BER), i.e. as the number of erroneous bits over the total of bits transmitted. To keep the BER low, a symbol redundancy is usually introduced at the transmit end, upstream of the modulator. Thus, a larger number of symbols are transmitted than are strictly required, resulting in increased band occupation. The redundancy is added by a channel encoder, and is removed by a channel decoder at the receive end.

Another, not necessarily exclusive, approach to lowering the BER consists in increasing the amount of energy associated with each bit, by either transmitting greater power or the same bit for a longer time.

A communication system may be called "robust" when the information re-constructed at the receive end is correct despite the channel type, or despite the type of noise present in the channel.

Therefore, robustness of the communication system is a necessary peculiarity wherever the conditions for communication are poor.

Over the last ten years, an advanced modulation system, known as the spread-spectrum modulation system, was introduced providing high-quality communications and is presently widely exploited in satellite, cellular telephone and military communication systems. Its name comes from that the power of the signal to be transmitted is spread over a much wider band than the needed band.

### Prior Art

In order to provide with robust and safe transmissions, e.g. in wireless communications, through noisy environment, the spread-spectrum modulation system currently represents the best choice.

A peculiar feature of this modulation system is a band occupation, by the discrete signal to be transmitted on an analog channel, which exceeds the bare minimum for transmission. In addition, a code is used which is independent of the sequence to be transmitted and can be utilized to re-construct the information at the receive end.

This modulation changes the harmonic constitution of the information, expanding its spectrum and distributing the power spectral density in a near-uniform manner such that the signal to be transmitted is given a shape resembling that of wide-band noise. This ensures a degree of immunity to noise by that the evenly spread spectral power is less likely to become corrupted by the noise for the same source power, same band width of the channel, and same noise power, if compared to other conventional modulation methods (such as AM, FM, PSK and other modulation methods).

The advantages of this type of modulation are :
(dwarf)remove the effects of interference between users in the form of multipath signal reflections;
hide a signal "beneath the noise", transmitting the information at a low power;
safeguard the message from active and passive attacks.

In general, spread-spectrum modulation is based on the application of special binary sequences, called pseudo-random or pseudo-noise sequences, which are combined with the original sequence of the signal to be transmitted. These pseudo-random sequences are effective to spread the information energy over a very wide band. For example, by using mutually orthogonal pseudo-random sequences, several users are enabled to communicate simultaneously on the same channel, as with the Code Division Multiple Access (CDMA) system.

At the receive end, the same pseudo-random sequence allows the signal to be re-constructed, provided that synchronization with the generators of pseudo-random sequences at the transmit and receive ends can be ensured.

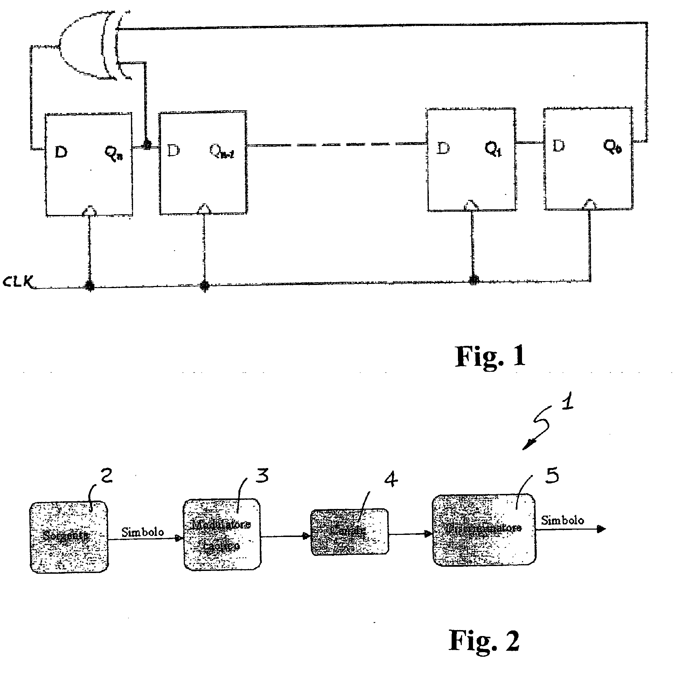

One example of a pseudo-random sequence generator is shown diagramatically in Figure 1.

This technique, although in many ways advantageous, based on the generation of pseudo-random sequences has certain limitations which can be identified in the very "pseudo" attribute thereof implying that the sequence is not a fully randomized one, since it must be known at both the transmit end and the receive end, and can closely look like a random sequence. This implies a cyclic and periodic character for the sequence which although very large, still has a finite value dependent on the complexity of the pseudo-random sequence generator. A major disadvantage of this type of modulation resides in the complex circuitry . that is needed to keep the transmitter and the receiver synchronized.

More recently, the conventional modulation technique based on pseudo-random sequences has been superseded by techniques based on a so-called chaotic modulation. Refer, for example, to an article "Communicating with chaos: State of the art and engineering challenges" by M. P. Kennedy, 4th Int. Workshop on Nonlinear Dynamics of Electronic Systems, June 27-28, 1996 Sevilla (ES), pages 1-8.

The properties which are peculiar to modulation systems based on the use of chaotic signals include:
unpredictability, because the value taken at a time t+Δt is unpredictable at a time t, the larger becomes Δt;
close resemblance to random signals (randomness), since a chaotic process is by its very nature a non-stationary process, in particular an aperiodic process, its spectrum continuously changing its power-distribution;
self-synchronizing capability, resulting in convergence of the paths of two interacting chaotic systems;
sensitivity to the starting conditions, causing divergent behaviors of identical, freely evolving systems with starting conditions which are arbitrarily close to one another;
bifurcation, being a phenomenon tied to the high sensitivity of chaotic circuits to parameter variations, which results in the dynamic behaviors of one system being thoroughly unrelated even where the starting coditions are the same.

In particular, the principal chaotic modulation methods are the following:
chaotic masking method, wherein the information to be transmitted is masked by adding a chaotic signal thereto;
chaos shift keying method, wherein one of two chaotic signals generated by two different systems respectively associated with a bit of 0 value and a bit of 1 value is transmitted. The same result can be obtained by having one system generate both signals, but changing the parameters between two or more sets of predetermined values;
reverted system method, wherein the chaos-generating circuit and the receiver of the communication system are the reverse of each other, a feature which ensures the self-synchronization property through the duration of the transmission, with no additional circuitry.

The underlying technical problem of this invention is to provide a robust communication system for transmissions through a noisy medium with such structural and functional features as to be useful in spread-spectrum modulation, but based on a chaotic carrier.

### Summary of the Invention

The principle behind this invention is one of providing a spread-spectrum communication system, based on modulating a chaotic carrier and on the use of an incoherent discriminator, for robust transmissions through a noisy medium.

The chaotic carrier may be generated, for instance, by a Chua's circuit.

Based on this principle, the technical problem is solved by a communication system comprising a cascade of a discrete signal source, a chaotic modulator for the signal, a noisy transmission channel, and an incoherent discriminator or receiver.

The features and advantages of a communication system according to the invention will be apparent from the following description of an embodiment thereof, given by way of example and not of limitation with reference to the accompanying drawings.

In the drawings:

### Brief Description of the Drawings

Figure 1 shows diagramatically a generator of pseudo-random sequences as used in a spread-spectrum modulation system according to the prior art.

Figure 2 shows diagramatically a communication system according to the invention.

Figure 3 shows diagramatically one embodiment of a conventional chaotic modulator known as Chua's circuit.

Figure 4 is a voltage vs. voltage plot of evolution paths in the modulator of Figure 3.

Figure 5 is a voltage vs. voltage plot of evolution paths in a single portion of the modulator of Figure 3.

Figures 6a, 6b, 6c and 6d are respective voltage vs. time plots of input, transmit, receive and output signals for the communication system of this invention.

Figure 7 shows diagramatically one embodiment of a portion of the communication system of this invention.

Figure 8 is a voltage vs. voltage plot of evolution paths in one portion of the modulator of Figure 3.

Figure 9 is a voltage vs. voltage plot of evolution paths in another portion of the modulator of Figure 3.

Figures 10a, 10b, 10c and 10d are respective voltage vs. time plots of input, transmit, receive and output signals for a modified embodiment of the communication system according to the invention.

Figure 11 shows diagramatically a second embodiment of a portion of the communication system according to the invention.

Figures 12, 13, 14 and 15 are exemplary circuit diagrams of components of the communication system portion shown in Figures 7 and 11.

### Detailed Description

Referring to the drawing views, and in particular to the example of Figure 2, a communication system for effecting transmissions through a noisy environment, embodying this invention, is generally shown at 1 in schematic form.

The system 1 is a robust type, meaning that the information re-constructed at the receive end is efficient regardless of the transmission channel type, or rather of the type of noise present on the channel.

The system 1 includes a discrete source 2 of logic values, 0 or 1, or symbols.

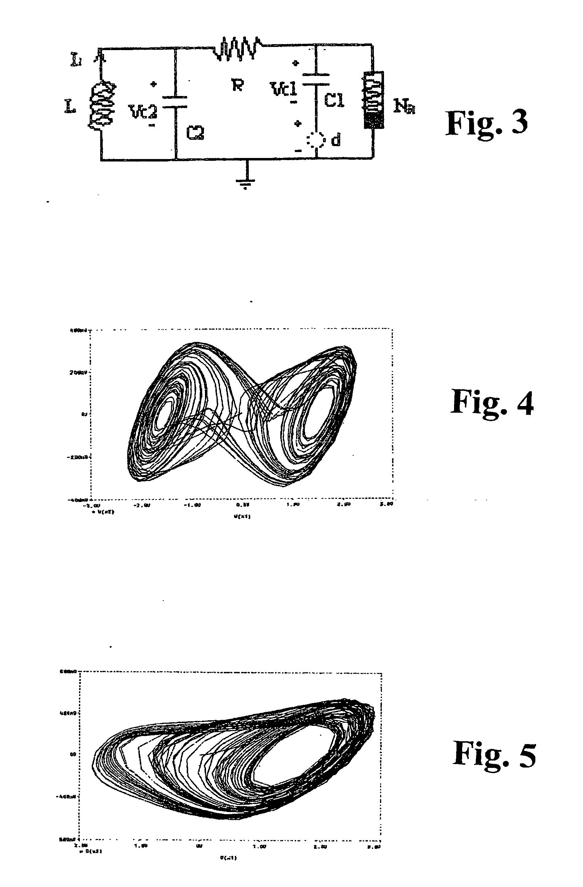

Provided downstream of the source 2 is a chaotic-type modulator 3. The chaotic modulator 3 may be a conventional one, e.g. based on a Chua's circuit as shown diagramatically in Figure 3.

Downstream of the chaotic modulator 3, there is a transmission channel 4 leading to a receiver 5 which is essentially an incoherent discriminator described hereinafter.

In the simplest of cases, the source 2 will generate the 0 and 1 bits as voltage levels, respectively equal to 0V and 5V. This signal is amplified and deprived of its direct component to produce a waveform between +3V and -3V which constitutes the modulating signal. The chaotic modulator 3 is controlled by the modulating signal shifting its path between attractors.

Where the modulator 3 comprises the Chua's circuit shown in Figure 3, the modulating signal d would be added to the voltage present across one, C1, of two capacitors C1 and C2. This technique is known as dithering, and is used with non-linear systems in order to control their evolution so as to linearize the system itself.

The control signal d, also referred to as dither, is added to the input signal u(t), upstream of the non-linear element of the system, thereby modifying the characteristic that links the circuit output to the input u(t).

In this case, the system is desired to stay non-linear, and the dither signal is only used for shifting the modulator 3 paths by acting on the non-linearity input.

Advantageously in this invention, a different construction may be selected for the incoherent discriminator 5.

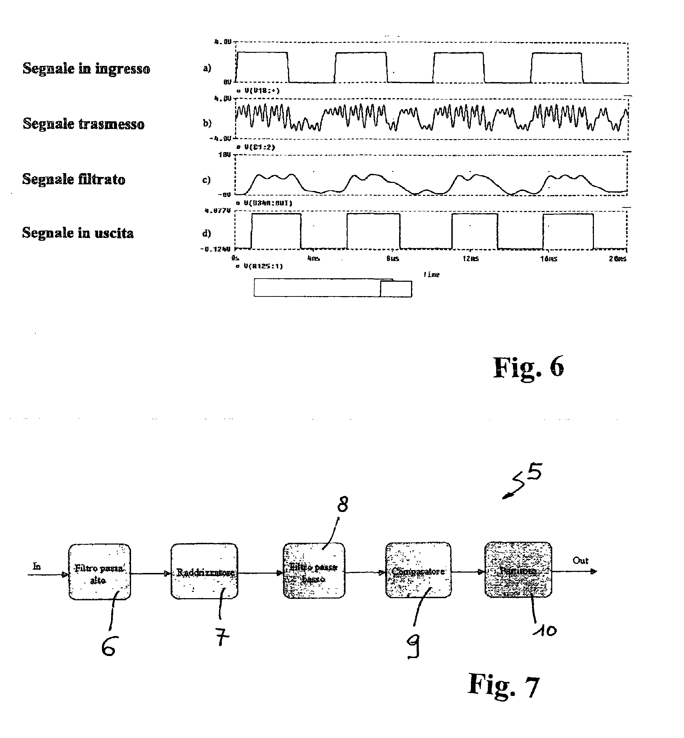

In a first preferred embodiment, the discriminator 5 is implemented by the sequence of functional blocks shown in Figure 7.

As shown in Figure 4, the chaotic modulator 3 is stimulated by an external signal to evolve across different attractors.

For transmission, an attractor is associated with each symbol, and at the receive end, the incoherent discriminator 5 re-constructs the sequence of the original signal by means of an appropriate filtering arrangement.

As said before, the source 2 generates a sequence of 0 and 1 bits. Associated with the 0 bit, i.e. with the low logic level, is a chaotic evolution corresponding to the complete Chua's attractor, referred to as double-scroll and shown in Figure 4.

On the other hand, the high logic level has a Rossler's attractor associated therewith, that is a single lobe of Chua's attractor whose evolution is illustrated in Figure 5.

The graph of Figure 6a shows a sequence of transmitted bits versus time, Figure 6b showing the output from the chaotic modulator 3. In this first embodiment, the discriminator 5 comprises a high-pass filter 6 effective to remove the lowest frequency harmonics of the received signal. A rectifier 7 then provides the absolute value with the wave. A low-pass filter 8 carries out a mean of the rectified wave to produce a filtered signal as shown in Figure 6c.

The result can be compared with a positive threshold by a comparator 9, since both rectified waveforms relating to the two chaotic evolutions have a direct component which is higher than zero. The output signal from the comparator 9 is transmitted to a divider 10, and the original sequence is re-constructed at the receive end as shown best in Figure 6d.

It will be appreciated by the skilled persons in the art that the system of this invention is self-synchronizing.

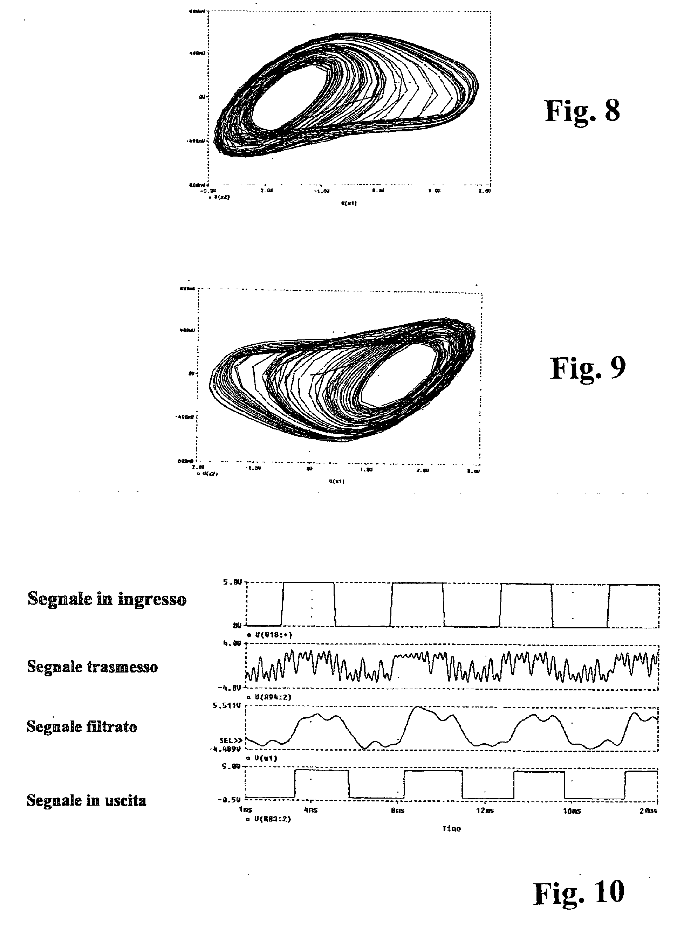

In a second embodiment, discussed by way of non-limitative example in relation to Figures 8 to 11, the incoherent discriminator 5 has been simplified, still within the principle of this invention.

In this embodiment, the low logic level is associated with a chaotic dynamics corresponding to the left-hand lobe of Chua's attractor, as shown in Figure 9.

Conversely, the right-hand lobe of Chua's attractor is, made to correspond to the high logic level, as shown in Figure 8.

The two waveforms associated with the logic levels of Figure 10a are characterized by a direct component which is of equal module and opposite sign (positive for the right-hand lobe and negative for the left-hand lobe).

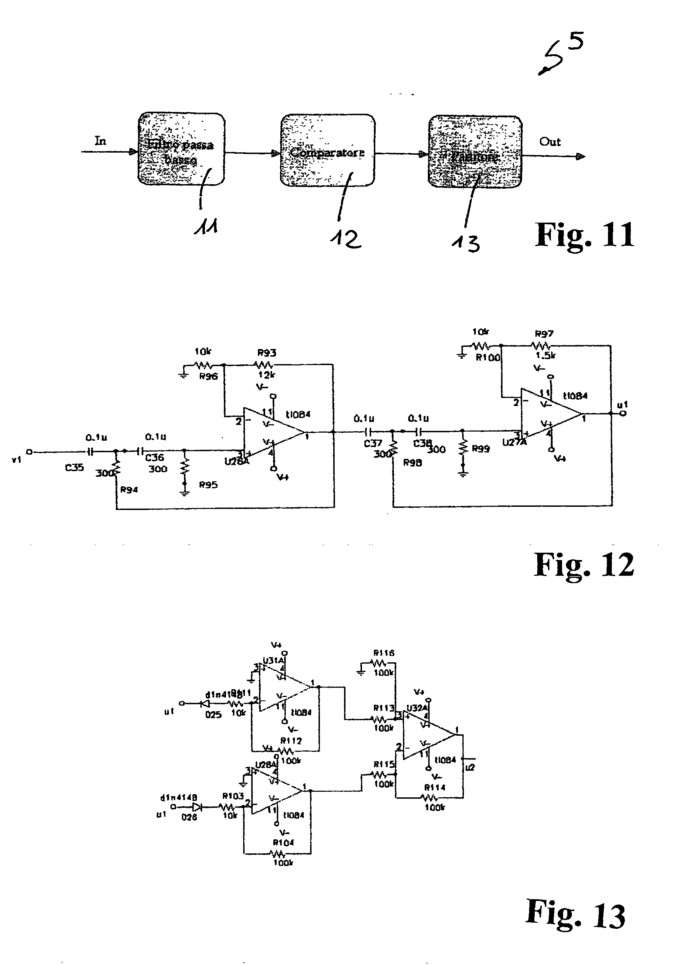

The discriminator 5 is input the signal of Figure 10b, and will filter it through a low-pass filter 11 of the fourth order, shown in Figure 11. The output signal from the filter 11 is processed through a comparator 12 of null threshold to produce a square wave in the -15V to +15V range. Finally, a divider 13 will scale the square wave to between 0V and 5V, producing the output signal shown in Figure 10d.

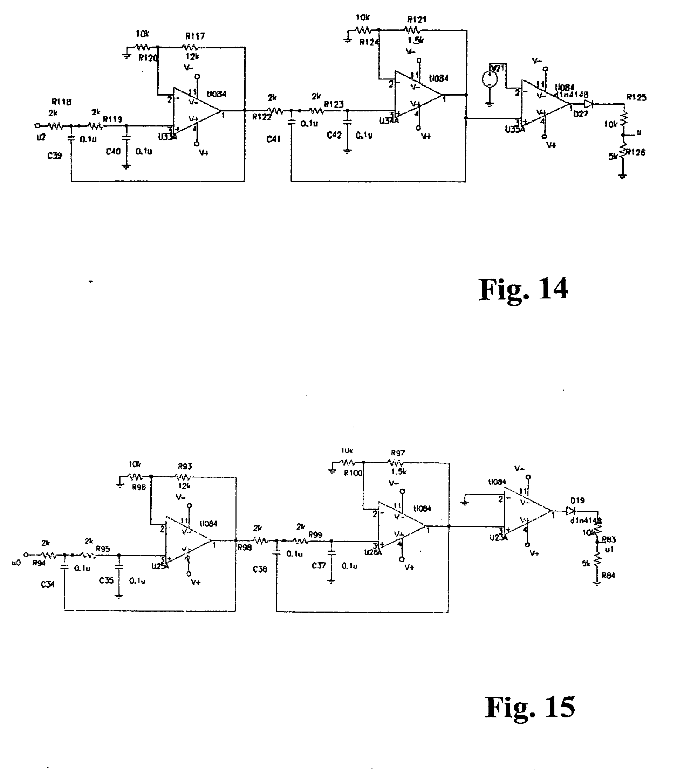

Shown in Figure 12 is a possible implementation circuit-wise of the first embodiment previously described, i.e. that relating to a complete Chua's attractor. In particular, Figure 12 shows the input module, in the form of a high-pass filter 6 of the 4th order. Shown in Figure 13 is a diagram of a full-wave rectifier 7, and in Figure 14, the low-pass filter 8, also of the 4th order, followed by a threshold type of comparator 9. The output divider 10 will scale the voltage to between 0V and 5V.

For the second embodiment, Figure 15 similarly illustrates a discrete element implementation of the incoherent discriminator. As said before, this second embodiment provides a much simpler discriminator, as by reducing the number of its components. In fact, a low-pass filter 11 of the 4th order, a null threshold comparator 12, and a divider 13 are all that is required.

The differences between the two embodiments described above are briefly reviewed herein below.

A most evident distinction lies in the complexity which characterizes the discriminator 5, depending on whether the first or the second embodiment is applied. In the first, no less than nine operational amplifiers are required as against the four needed in the second embodiment. The extra elements are necessary to provide, in the waveform derived by the double scroll attractor, a direct component resulting from filtering and rectifying steps. In the second embodiment, the two waveforms are inherently characterized by a readily identifiable direct component of opposite sign. The above leads to a second distinction consisting in the lower average power expended to transmit the waveforms of the first system proposed, by virtue of the double scroll having a near-null direct component. Both embodiments ensure a transmission rate which is approximately one tenth of the channel band width corresponding to the same limit of spread-spectrum transmissions according to the prior art.

A comparison with the conventional modulation systems discussed under the Prior Art heading might spot a likeness to the chaos shift keying method due to that, in CSK modulation, the 0 and 1 bits are associated with two different chaotic evolutions. However, a communication system based on that modulation would have the disadvantage of requiring special circuits and conditions for synchronizing the transmission between the transmitter and the receiver.

The system of this invention, on the contrary, sets aside without such synchronization between the transmitter and the receiver, although relying on the characteristics of chaotic attractors.

Anyway, where other attractors than the proposed ones are associated with the information generated by the source 2, simple adaptations can be made unto the discriminator 5 for the system to ensure a correct transmission.

## Claims

1. A robust communication system (1) for transmissions through a noisy environment, characterized in that it comprises a cascade of a discrete signal source (2), a chaotic modulator (3) for the signal, a noisy transmission channel (4), and an incoherent discriminator or receiver (5).

2. A system according to Claim 1, characterized in that said incoherent discriminator (5) comprises a high-pass filter (6) effective to remove the lowest frequency harmonics of the received signal, a rectifier (7) supplying the absolute value of the wave, and a low-pass filter (8) providing a mean of the rectified wave.

3. A system according to Claim 2, characterized in that said discriminator (5) further comprises a comparator (9) placed downstream of the low-pass filter.

4. A system according to Claim 1, characterized in that a low logic value, generated by said discrete signal source (2), is associated a chaotic evolution corresponding to a complete Chua's attractor.

5. A system according to Claim 1, characterized in that said incoherent discriminator (5) comprises a low-pass filter (11) having its output connected to a null-threshold comparator (12), and a divider (13) connected after the comparator to scale the square-wave output signal.

6. A system according to Claim 2, characterized in that it is self-synchronizing.

7. A system according to Claim 5, characterized in that a low logic value, generated by said discrete signal source (2), is associated a chaotic dynamics corresponding to the left-hand lobe only of a Chua's attractor.

8. A system according to Claim 5, characterized in that said low-pass filter (11) is a fourth order filter.
